# EUROPÄISCHE PATENTSCHRIFT

(11) **EP 0 561 012 B1**
(45) Veröffentlichungstag und Bekanntmachung des Hinweises auf die Patenterteilung: **29.05.1996**
(21) Anmeldenummer: 92104492.1
(22) Anmeldetag: 16.03.1992
(51) Int. Cl.: B01D 19/00, B01D 5/00, F28B 9/08

(54) **Verfahren und Einrichtung zum Behandeln von Wasser in einem Oberflächenkondensator**
Method and apparatus for water treatment in a surface condenser
Procédé et dispositif pour le traitement d'eau dans un condensateur à surface

(43) Veröffentlichungstag der Anmeldung: 22.09.1993
(73) Patentinhaber: ASEA BROWN BOVERI AG, CH-5401 Baden (CH)
(72) Erfinder: Blangetti, Francisco Leonardo, Dr., CH-5400 Baden (CH); Smoglie, Cecilia, Dr., CH-5400 Baden (CH); Timoney, Gerry, CH-5027 Herznach (CH)

(56) Entgegenhaltungen:
- DE-A- 1 495 177
- DE-A- 1 501 337
- DE-C- 567 338
- US-A- 1 622 283
- US-A- 2 355 057

## Beschreibung

### Technisches Gebiet

Die Erfindung betrifft ein Verfahren zum Behandeln von Wasser in einem Oberflächenkondensator, bei welchem das Wasser oberhalb der berohrten Zone in den Kondensator eingeleitet wird. Sie bezieht sich auch auf eine Vorrichtung zur Durchführung des Verfahrens.

### Stand der Technik

Solche Verfahren werden insbesondere in Dampfkraftwerken zur Entgasung und Aufwärmung von Kondensat oder Zusatzwasser angewendet. Das zu behandelnde Wasser wird dabei über die Rohrbündel im Kondensatorinnern gespritzt (siehe z.B. US-A-1 622 283). Die Grundphilosophie für die Einspritzung über Bündel basiert auf der Nutzung des Rohrverbandes als Austauschapparat. Die Kontaktzeit des eingespritzten Wassers mit dem Dampf respektiv die Verweilzeit im Dampfraum wird dabei verlängert, so dass die wärme- und stoffkinetischen Austauschvorgänge genügend Zeit zum Einwirken haben. Diese Zeit bewegt sich zwischen 5 und 10 Sekunden, je nach Grösse der Rohrbündel und der Dampfgeschwindigkeit.

Die strengen Anforderungen an einen niedrigen Sauerstoffgehalt im Kondensat erfordern besondere Lösungen, sofern es sich um grosse Mengen von zu behandelndem Wasser handelt. Denn die oben beschriebene Art, das Wasser über Bündel zu spritzen, ist nur anwendbar, wenn die gesamte Flüssigkeitsbelastung, d.h. Kondensat und eingespritztes Wasser, bezogen auf die Austauschfläche des Kondensators, eine bestimmte Grenze nicht überschreitet. Diese Grenze liegt etwa bei 15 g/(m²s). Die Folgen einer übermässigen Einspritzung liegen darin, dass das Wasser zwar wirkungsvoll entgast wird, der Vorgang indes eine Vermehrung der dampfseitigen Druckverluste über Bündel verursacht und damit eine Verschlechterung des Vakuums im Kondensator. Diese Druckverluste bewirken eine Verminderung der thermischen Leistung des Kondesators. Die Entgasung wird somit mit einem kleinen k-Wert erkauft.

### Darstellung der Erfindung

Hier will die Erfindung Abhilfe schaffen. Ihr liegt die Aufgabe zugrunde, ein Verfahren zu schaffen, bei welchem das zu behandelnde Wasser innerhalb des Kondensators einer wirkungsvollen Entgasung unterworfen wird, ohne dass dabei das Kondensatorvakuum beeinträchtigt wird.

Erfindungsgemäss wird dies durch das Verfahren von Anspruch 1 bzw. die Vorrichtung von Anspruch 2 erreicht.

Mit diesem Massnahmen wird ein eigentlicher Stoffaustauscher und Wärmeaustauscher in Form eines an der Kondensatorwand haftenden Fallfilmes oder Rieselfilmes geschaffen.

Es ist zweckmässig, wenn das Rohr über seine ganze Längserstreckung an seiner Unterseite dampfdicht mit einer Wanne verbunden ist, welche eine an die Innenwand angrenzende Abflussöffnung aufweist.

### Kurze Beschreibung der Zeichnung

In der Zeichnung ist ein Ausführungsbeispiel der Erfindung anhand eines Teilbündelkondensators schematisch dargestellt. Es zeigen:
- Fig. 1: einen Teillängsschnitt eines Oberflächenkondensators;
- Fig. 2: einen Schnitt durch den Kondensator gemäss Linie 2-2 in Fig. 1.

Es sind nur die für das Verständnis der Erfindung wesentlichen Elemente gezeigt. Nicht dargestellt sind von der Anlage beispielsweise die Dampf- und die Wasserzuführung, die Befestigung der Kondensatorschale am Turbinengehäuse, die Stützplatten für die Kondensatorrohre und dgl. Die Strömungsrichtung der Arbeitsmittel ist mit Pfeilen bezeichnet.

### Weg zur Ausführung der Erfindung

Die beispielsweise aus der DE 1 501 337 bekannte teilbündelartige Anordnung der wasserdurchströmten Kühlrohre ist massgebend für die kastenartige, hier einen rechteckigen Grundriss aufweisende Grundform der Kondensatorschale. Diese Schale bildet die äussere Begrenzung des Dampfraumes des Kondensators und setzt sich zusammen aus dem Mantel, welcher von den zwei Seitenwänden 1 und den zwei Rohrböden 2 gebildet ist, sowie dem Kondensatorboden 3.

Die einzelnen Teilbündel 4, welche aus bis zu je 2000 Kühlrohren bestehen und eine Höhe von 5 m erreichen können, sind in Rohrlängsrichtung in nicht dargestellten Stützplatten geführt. Die Kühlrohre selbst sind an ihren beiden Enden in den Rohrböden 2 eingeschweisst und/oder eingewalzt. Auf der dem Dampfraum 5 abgewandten Seite der Rohrböden 2 sind die Wasserkammern 6 angedeutet.

Ueber einen nicht gezeigten Abdampfstutzen, mit dem der Kondensator an der Turbine hängt, strömt der Dampf in den länglichen Kondensatorhals ein. Darin wird ein möglichst gutes homogenes Strömungsfeld erzeugt, um eine saubere Dampfbespülung der stromabwärts angeordneten Bündel über deren ganze Länge vorzunehmen. Der Dampf verteilt sich im Dampfraum durch Strömungskanäle. Diese verengen sich in der allgemeinen Richtung der Strömung derart, dass die Strömungsgeschwindigkeit des Dampfes in diesen Kanälen zumindest annähernd konstant bleibt oder sogar beschleunigt wird. Die freie Zuströmung des Dampfes zu den aussenliegenden Rohren der Teilbündel ist gewahrt. Durch die Bündel strömt der Dampf anschliessend mit durch die geringe Rohrreihentiefe bedingtem kleinen Widerstand hindurch. Um die Bedingung der in den Zuströmkanälen konstant zu haltenden oder zu erhöhenden Dampfgeschwindigkeit erfüllen zu können, sind die Teilbündel im Kondensator so nebeneinander angeordnet, dass zwischen ihnen Strömungskanäle entstehen, die im Schnittbild in ähnlicher Grössenordnung erscheinen wie die Teilbündel selbst. Des weiteren bilden die Rohre in den hintereinanderfolgenden Reihen eine in sich geschlossene Wand, die vorzugsweise durchwegs von gleicher Dicke ist.

Ein solcher Kondensator weist den Vorteil auf, dass durch die lockere Anordnung der Teilbündel alle peripheren Rohre eines Teilbündels ohne merklichen Druckverlust gut mit Dampf beaufschlagt sind. Andererseits bedingt das Erfordernis nach zumindest annähernd gleicher "Wandstärke" des berohrten Teilbündels eine relativ grosse Bauhöhe des Teilbündels. Hieraus resultiert die hervorragende Eignung dieses Teilbündelkonzeptes für Grosskondensatoren, bei denen eine Mehrzahl von Teilbündeln 4 stehend nebeneinander angeordnet werden.

Nach Erreichen der maximal vorgegebenen Geschwindigkeit im Dampfraum zwischen je zwei Teilbündeln wird der Dampf bis auf die Geschwindigkeit Null abgebremst mit gleichzeitigem Druckrückgewinn. Dies wird dadurch erreicht, dass der untere Teil der Dampfgasse divergent ausgeführt wird. Hier gilt es zu beachten, dass die Kanalerweiterung infolge der zunehmenden Abnahme des Massenstromes optisch nicht erkennbar sein muss. Massgebend ist, dass der zum Kondensatorboden hinströmende Restdampf dort einen Staudruck erzeugt. Dadurch wird der Dampf umgelenkt und versorgt so auch die unteren Teile der Bündel. Die durch den Staudruck bedingte Temperaturerhöhung kommt dem von Rohr zu Rohr hinabfliessenden Kondensat zugute, indem es sich, falls es sich unter Sättigungstemperatur abgekühlt hatte, wieder erwärmt. Dadurch sichert man sich zwei Vorteile: Thermodynamische Verluste wegen Kondensatunterkühlung sind nicht vorhanden und der Sauerstoffgehalt des Kondensates ist auf ein Minimun reduziert.

Im Betrieb kondensiert der Dampf an den Rohren und das Kondensat tropft gegen den Kondensatorboden 3 ab und zwar in das unterhalb der Teilbündel angeordnete Kondensatsammelgefäss 7. Von dort gelangt es in den nicht dargestellten Wasser/Dampf-Kreislauf.

Gemäss der Erfindung wird nunmehr das im Dampfraum zu behandelnde Wasser, welches beispielsweise Zusatzwasser sein kann oder Kondensat, welches anlässlich der Entwässerung von Vorwärmern anfällt, in ein Verteilrohr 8 eingeleitet. Dieses Verteilrohr 8 erstreckt sich im gezeigten Fall längs der freien Seitenwände 1 oberhalb der Teilbündel 4. Es weist eine Mehrzahl von beabstandeten Bohrungen 9 auf, die gegen die jeweilige Wand gerichtet sind. Anzahl, Abstand und Grösse der Bohrungen sind dabei so gewählt, dass das gegen die Wand gespritzte Wasser einen geschlossenen Wasserfilm bildet. Als Richtwert kann hier angegeben werden, dass die Abgabegeschwindigkeit, bezogen auf den Lochdurchmesser, circa 2 m/s beträgt. Bei einer Wasserabgabe von max. 5 kg/s und pro m Wand wird der Film 12 weitgehend an der Wand haften bleiben. Er wird eine mittlere Abflussgeschwindigkeit von 0.7 bis 0.9 m/s aufweisen. Dieser turbulente Film, der eine Filmdicke von ca. 1mm aufweist, bewegt sich infolge der hohen Anordnung des Verteilrohres über einen Fallweg von ca. 5 m. Dies bedeutet, dass die Verweilzeit des zu behandelnden Wassers etwa jener entspricht, die beim bisher üblichen Aufspritzen auf die Teilbündel erzielt wurde.

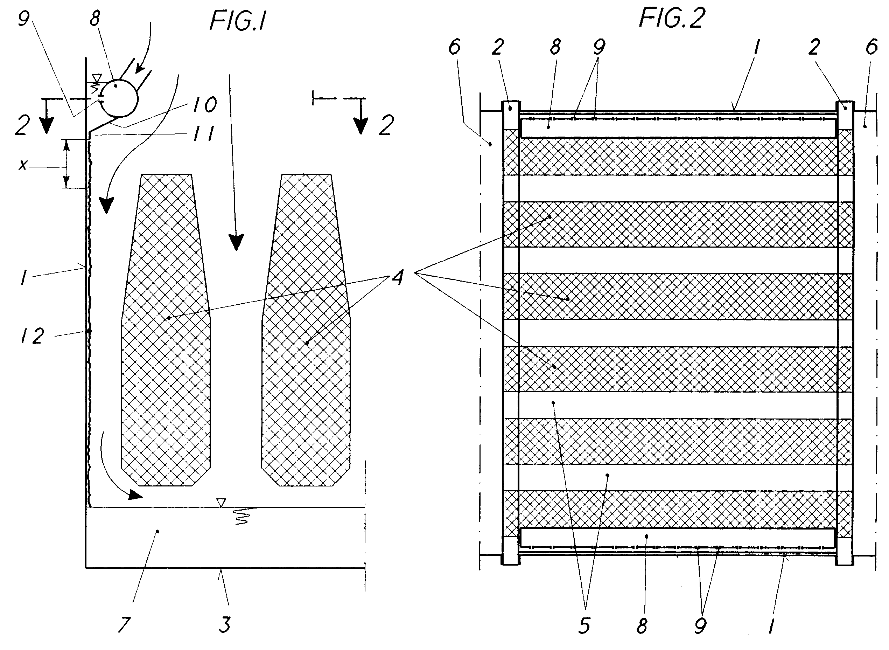

In dem in Fig. 1 dargestellten Beispiel gelangt das Wasser aus den Bohrungen 9 zunächst in eine Wanne 10. Hierbei handelt es sich um eine Blechkonstruktion, die mit der Unterseite des Verteilrohres dampfdicht verbunden ist und gegen die Seitenwand 1 eine eigentliche Filmabgabevorrichtung 11 bildet. Diese Abgabevorrichtung besteht aus einer Anzahl beabstandeter Löcher. Innerhalb der Wanne staut sich das Wasser auf einem Flüssigkeitsniveau auf. Dieses kann so gewählt sein, dass die für die Abgabevorrichtung erforderliche hydrostatische Höhe entsteht.

Das aus der Filmabgabevorrichtung abfliessende Wasser bildet nach einer gewissen Anlaufstrecke x, welche ca. 0,5 m beträgt, einen ausgebildeten turbulenten Film 12, welcher an der Wand haftet. Während des Abfliessens ist dieser Film in innigem Kontakt mit dem zwischen wandnächsten Teilbündel und Seitenwand strömendem Dampf.

In Abweichung zur gezeigten Anordnung kann sich das Verteilrohr nicht nur längs der Seitenwände 1 erstrecken; es kann selbstverständlich zusätzlich an den Rohrböden 2 entlang verlaufen, wodurch die freien Wandteile zwischen den Rohrbündeln ebenfalls zu Austauschzwecken benutzt werden könnten.

### Bezugszeichenliste

- 1: Seitenwand
- 2: Rohrboden
- 3: Kondensatorboden
- 4: Teilbündel
- 5: Dampfraum
- 6: Wasserkammer
- 7: Kondensatsammelgefäss
- 8: Verteilrohr
- 9: Bohrung
- 10: Wanne
- 11: Filmabgabevorrichtung
- 12: Wasserfilm
- x: Filmanlaufstrecke

## Patentansprüche

1. Verfahren zum Behandeln von Wasser in einem Oberflächenkondensator, bei welchem das Wasser oberhalb der berohrten Zone in den Kondensator eingeleitet wird und durch innigen Kontakt mit Dampf entgast wird,
dadurch gekennzeichnet,
dass das Wasser in Form eines haftenden Wasserfilms (12) an den zumindest annähernd vertikal verlaufenden Innenwänden (1, 2) des Kondensators in das Kondensatsammelgefäss (7) herabfliesst und hierbei während einer Verweilzeit von mehreren Sekunden in innigem Kontakt mit dem die wandnächsten Rohrbündel (4) umströmenden Dampf tritt.

2. Vorrichtung zur Durchführung des Verfahrens nach Anspruch 1, wobei der Oberflächenkondensator einen Mantel aufweist, welcher im wesentlichen aus Seitenwänden (1) und Rohrböden (2) besteht, deren Innenwände den Dampfraum (5) begrenzen und bei dem sich die Rohrbündel (4) im Dampfraum zwischen den Rohrböden erstrecken, mit Mitteln oberhalb der Rohrbündel zur Einführung des zu behandelnden Wassers,
dadurch gekennzeichnet,
dass die Mittel zur Einführung des zu behandelnden Wassers aus einem Verteilrohr (8) bestehen, welches sich entlang zumindest einer der den Dampfraum (5) begrenzenden Innenwände erstreckt, welches Verteilrohr mit einer Mehrzahl von gegen die Wand gerichteten Bohrungen (9) versehen ist.

3. Vorrichtung nach Anspruch 2, dadurch gekennzeichnet, dass das Rohr (8) über seine ganze Längserstreckung an seiner Unterseite dampfdicht mit einer Wanne (10) verbunden ist, welche eine an die Innenwand (1, 2) angrenzende Filmabgabevorrichtung (11) aufweist.

## Claims

1. Method for treating water in a surface condenser in which the water is introduced into the condenser above the tubed zone and is degassed by intimate contact with steam, characterised in that the water flows down into the condensate receiver (7) in the form of an adhering water film (12) on the condenser inner walls (1, 2), which extend at least approximately vertically, and, in the process, the water comes into intimate contact with the steam flowing around the tube bundles (4) nearest to the wall during a residence time of several seconds.

2. Device for carrying out the method according to Claim 1, the surface condenser having an outer cover which essentially consists of side walls (1) and tube bottoms (2), the inner walls of which bound the steam space (5), and in which the tube bundles (4) extend in the steam space between the tube bottoms, with means above the tube bundles for introducing the water to be treated, characterised in that the means for introducing the water to be treated consist of a distributor tube (8) which extends along at least one of the inner walls bounding the steam space (5), which distributor tube is provided with a plurality of holes (9) directed towards the wall.

3. Device according to Claim 2, characterised in that the bottom of the tube (8) is connected, over the complete longitudinal extension of the tube, in a steam-tight manner to a trough (10), which has a film delivery appliance (11) adjacent to the inner wall (1, 2).

## Revendications

1. Procédé pour le traitement de l'eau dans un condenseur à surface, dans lequel l'eau est introduite dans le condenseur au-dessus de la zone des tubes et est dégazée par contact intime avec la vapeur, caractérisé en ce que l'eau s'écoule de haut en bas sous la forme d'un film d'eau adhérent (12) sur les parois intérieures (1, 2) du condenseur, orientées au moins approximativement à la verticale, dans le réservoir de collecte de condensat (7) et entre alors en contact intime, pendant un temps de séjour de plusieurs secondes, avec la vapeur enveloppant le faisceau de tubes (4) le plus proche de la paroi.

2. Dispositif pour la mise en oeuvre du procédé suivant la revendication 1, dans lequel le condenseur à surface présente une enveloppe qui se compose essentiellement de parois latérales (1) et de plateaux à tubes (2), dont les parois intérieures délimitent la chambre de vapeur (5) et dans lequel les faisceaux de tubes (4) s'étendent dans la chambre de vapeur entre les plateaux à tubes, avec des moyens situés au-dessus des faisceaux de tubes pour l'introduction de l'eau à traiter, caractérisé en ce que les moyens pour l'introduction de l'eau à traiter se composent d'un tube de répartition (8), qui s'étend le long d'au moins une des parois intérieures délimitant la chambre de vapeur (5), tube de répartition qui est pourvu d'une pluralité de trous (9) dirigés vers la paroi.

3. Dispositif suivant la revendication 2, caractérisé en ce que le tube (8) est raccordé de façon étanche à la vapeur, sur toute son extension en longueur, par son côté inférieur à une corniche (10), qui présente un dispositif d'éjection de film (11) avoisinant la paroi intérieure (1, 2).
